# EUROPÄISCHE PATENTANMELDUNG

(11) **EP 4 331 882 A1**
(43) Veröffentlichungstag der Anmeldung: **06.03.2024**
(21) Anmeldenummer: 23194983.5
(22) Anmeldetag: 01.09.2023
(51) Int. Cl.: B60J 3/02

(54) **SONNENBLENDE**

(30) Priorität: 02.09.2022 DE 102022122299
(71) Anmelder: Adler, Sven, 09350 Lichtenstein Sachsen (DE)
(72) Erfinder: Adler, Sven, 09350 Lichtenstein Sachsen (DE)
(74) Vertreter: Findeisen Neumann Scheit Partnerschaft mbB

(57) **Zusammenfassung**

Die Erfindung betrifft Sonnenblende eines Kraftfahrzeuges, die im Inneren des Kraftfahrzeuges am Fahrzeughimmel verschwenkbar an zumindest einem Befestigungspunkt befestigt ist und bei Bedarf in den oberen Teil des Sichtfeldes des Fahrers oder Beifahrers des Kraftfahrzeuges verschwenkbar ist, wobei ein Hauptteil der Sonnenblende ein erstes lichtteildurchlässiges Verlängerungsteil aufweist, welches von dem zumindest einen Befestigungspunkt weg über einen unteren Längsschlitz aus dem Hauptteil der Sonnenblende herausführbar ist. Aufgabe der Erfindung ist es, eine Sonnenblende zu schaffen, die sowohl gegen blendendes Sonnenlicht auch als gegen blendendes Scheinwerferlicht einen optimalen Blendschutz bietet. Diese Aufgabe wird dadurch gelöst, dass die Sonnenblende (1) ein zweites lichtteildurchlässiges Verlängerungsteil (5) aufweist, welches von dem zumindest einen Befestigungspunkt (3) weg über den unteren Längsschlitz (6) oder einen weiteren unteren Längsschlitz (7)aus dem Hauptteil (2) der Sonnenblende (1) herausführbar ist und dass das erste lichtteildurchlässige Verlängerungsteil (4) und das zweite lichtteildurchlässige Verlängerungsteil (5) im Wesentlichen parallel zueinander geführt sind und dass das erste lichtteildurchlässige Verlängerungsteil (4) in einem Gelbton und das zweite lichtteildurchlässige Verlängerungsteil (5) in einem Grauton eingefärbt ist.

## Beschreibung

Die Erfindung betrifft eine Sonnenblende eines Kraftfahrzeuges, die im Inneren des Kraftfahrzeuges am Fahrzeughimmel verschwenkbar an zumindest einem Befestigungspunkt befestigt ist und bei Bedarf in den oberen Teil des Sichtfeldes des Fahrers oder Beifahrers des Kraftfahrzeuges verschwenkbar ist.

Üblicherweise sind Kraftfahrzeuge mit Sonnenblenden ausgestattet. Diese dienen insbesondere als Blendschutz für den Fahrzeugführer beispielsweise gegen tiefstehende Sonne oder bei Dunkelheit gegen das Scheinwerferlicht entgegenkommender Fahrzeuge. Die Sonnenblenden sind meist am Fahrzeughimmel des Kraftfahrzeuges verschwenkbar befestigt, sodass diese bei Bedarf in den oberen Teil des Sichtfeldes des Fahrers oder auch Beifahrers verschwenkt werden können.

Aus dem Stand der Technik sind Weiterentwicklungen derartiger Sonnenblenden bekannt. Aus der DE 201 01 766 U1 ist eine Sonnenblende bekannt, welche ein aus Kunststofffolie gebildetes Verlängerungsteil als Zusatzblende aufweist, die in den Sonnenblendenkörper (Hauptteil) integriert ist. Zur Vergrößerung der Blendschutzfläche wird dieses Verlängerungsteil vom Fahrzeughimmel des Kraftfahrzeuges weg nach unten aus dem Sonnenblendenkörper herausgezogen. Das Verlängerungsteil ist weiterhin lichtteildurchlässig ausgeführt, sodass zum einen eine Blendung verringert und zum anderen noch eine ausreichende Sicht durch das Verlängerungsteil gewährleistet wird.

Eine ähnliche Sonnenblende mit Zusatzblende wird in der DE 93 05 962 U1 beschrieben. Auch hier wird ein Verlängerungsteil über einen unteren Längsschlitz aus dem Hauptteil der Sonnenblende herausgezogen. Alternativ wird auch ein motorisches Ausfahren des Verlängerungsteils aus dem Sonnenblendenkörper beschrieben, der in einer weiteren Ausgestaltung auch über einen Lichtsensor steuerbar ist.

Nachteilig bei den genannten Lösungen ist allerdings, dass die Einfärbung des lichtteildurchlässigen Verlängerungsteils entweder auf blendendes Sonnenlicht oder auf blendendes Scheinwerferlicht eines entgegenkommenden Fahrzeuges ausgelegt ist. Eine auf Sonnenlicht ausgelegte Einfärbung ist für Scheinwerferlicht nur unzureichend geeignet. Auch umgekehrt bietet eine auf Scheinwerferlicht ausgelegte Einfärbung nur einen verminderten Nutzen bei Sonnenlicht.

Aufgabe der Erfindung ist es, eine Sonnenblende zu schaffen, die sowohl gegen blendendes Sonnenlicht auch als gegen blendendes Scheinwerferlicht einen optimalen Blendschutz bietet.

Diese Aufgabe wird dadurch gelöst, dass die Sonnenblende neben dem ersten lichtteildurchlässigen Verlängerungsteil ein zweites lichtteildurchlässiges Verlängerungsteil aufweist, welches von dem zumindest einen Befestigungspunkt weg über den unteren Längsschlitz oder einen weiteren unteren Längsschlitz aus dem Hauptteil der Sonnenblende herausführbar ist. Das erste lichtteildurchlässige Verlängerungsteil ist in einem Gelbton und das zweite lichtteildurchlässige Verlängerungsteil in einem Grauton eingefärbt. Beide Verlängerungsteile sind im Wesentlichen parallel zueinander geführt.

Damit ergibt sich der Vorteil, dass der Fahrer bzw. Beifahrer bei der ihm zugeordneten Blende je nach Bedarf das erste lichtteildurchlässige Verlängerungsteil oder das zweite lichtteildurchlässige Verlängerungsteil aus dem Hauptteil der Sonnenblende herausführen kann. Wird der Fahrer bzw. Beifahrer in der Nacht vom Scheinwerferlicht eines entgegenkommenden Fahrzeuges geblendet, kann er das erste, in einem Gelbton eingefärbte Verlängerungsteil aus dem Hauptteil der in den oberen Teil des Sichtfeldes des Fahrers oder Beifahrers des Kraftfahrzeuges verschwenkten Sonnenblende herausziehen. Das erste Verlängerungsteil erstreckt sich dann über einen weiteren Teil des Sichtfeldes unterhalb des von dem Hauptteil der Sonnenblende überdeckten Sichtfeldes. Somit wird das von dem entgegenkommenden Fahrzeug ausgestrahlte Scheinwerferlicht durch das erste Verlängerungsteil abgeschwächt und die Blendwirkung für den Fahrer bzw. Beifahrer vermindert. Sofern das erste Verlängerungsteil nicht benötigt wird (z.B. bei Tag) kann das erste Verlängerungsteil wieder in das Hauptteil der Sonnenblende eingeführt werden. Wird der Fahrer bzw. Beifahrer hingegen bei Tag von einer tiefstehenden Sonne geblendet, kann er das zweite, in einem Grauton eingefärbte Verlängerungsteil aus dem Hauptteil der in den oberen Teil des Sichtfeldes des Fahrers oder Beifahrers des Kraftfahrzeuges verschwenkten Sonnenblende herausziehen. Das zweite Verlängerungsteil erstreckt sich dann über den weiteren Teil des Sichtfeldes unterhalb des von dem Hauptteil der Sonnenblende überdeckten Sichtfeldes. Somit wird das Licht der tiefstehenden Sonne durch das zweite Verlängerungsteil abgeschwächt und die Blendwirkung für den Fahrer bzw. Beifahrer vermindert. Sofern das zweite Verlängerungsteil nicht benötigt wird (z.B. bei Nacht) kann das zweite Verlängerungsteil wieder in das Hauptteil der Sonnenblende eingeführt werden.

Je nach Anwendungsfall kann der Fahrer bzw. Beifahrer damit eine auf die jeweilige Lichtquelle optimierte Zusatzblende in sein Sichtfeld führen.

In einer vorteilhaften Ausführung sind das erste lichtteildurchlässige Verlängerungsteil und/oder das zweite lichtteildurchlässige Verlängerungsteil jeweils mit einem aus dem Hauptteil der Sonnenblende herausgeführten Schiebeelement verschiebbar. Das erste Verlängerungsteil bzw. zweite Verlängerungsteil können dann in einfacher Weise aus dem Hauptteil der Sonnenblende heraus- bzw. in das Hauptteil der Sonnenblende eingeschoben werden.

Eine weitere Ausführung sieht vor, dass das erste lichtteildurchlässige Verlängerungsteil und/oder das zweite lichtteildurchlässige Verlängerungsteil jeweils über einen im Hauptteil der Sonnenblende integrierten elektromotorischen Antrieb aus dem Hauptteil der Sonnenblende herausführbar sind. Somit kann eine händische Betätigung zum Hinein- bzw. Herausschieben des ersten bzw. zweiten Verlängerungsteil entfallen. Die Betätigung des elektromotorischen Antriebs kann beispielsweise per Knopfdruck erfolgen.

Es wird vorgeschlagen, dass der elektromotorische Antrieb mit einer Steuereinheit verbunden ist und diese Steuereinheit mit einem ersten Lichtsensor verbunden ist. Der erste Lichtsensor dient der Erfassung einer im Sichtfeld des Fahrers oder Beifahrers liegenden Blendquelle. Je nach Stärke der Blendquelle kann dann die vom ersten Lichtsensor erfasste Lichtintensität zur beleuchtungsabhängigen Steuerung des elektromotorischen Antriebs des ersten Verlängerungsteils und/oder des elektromotorischen Antriebs des zweiten Verlängerungsteils genutzt werden.

In einer vorteilhaften Ausführung ist die Steuereinheit mit einem Zeitgeber verbunden, sodass die vom Zeitgeber bereitgestellte Zeit (als Maß für "Tag" oder "Nacht") ebenfalls für die Steuerung des elektromotorischen Antriebs des ersten Verlängerungsteils und/oder des elektromotorischen Antriebs des zweiten Verlängerungsteils - insbesondere hinsichtlich der Entscheidung, ob beim Vorliegen einer Blendung das erste oder das zweite Verlängerungsteil ausgefahren werden soll - genutzt werden.

Eine weitere Ausgestaltung sieht vor, dass die Steuereinheit mit einem zweiten Lichtsensor verbunden ist und dieser zweite Lichtsensor eine Umgebungshelligkeit des Kraftfahrzeuges als Maß der Tageszeit erfasst und der elektromotorische Antrieb über die Steuereinheit und den zweiten Lichtsensor beleuchtungsabhängig steuerbar ist. Dieser zweite Lichtsensor kann damit alternativ zum Zeitgeber als Erkennung der Tageszeit ("Tag" oder "Nacht") genutzt werden.

Es wird vorgeschlagen, dass bei einer auf der Fahrerseite des Fahrzeuges montierten Sonnenblende diese Sonnenblende ein drittes lichtteildurchlässiges Verlängerungsteil aufweist und dieses dritte lichtteildurchlässige Verlängerungsteil auf einer dem Beifahrer zugewandten Seite über einen seitlichen Längsschlitz aus dem Hauptteil der Sonnenblende herausführbar ist. Damit wird eine in Richtung Beifahrerseite seitlich am Hauptteil der Sonnenblende anschließende weitere Zusatzblende bereitgestellt.

Weiterhin wird vorgeschlagen, dass das dritte lichtteildurchlässige Verlängerungsteil in einem Gelbton oder einem Grauton eingefärbt ist.

In einer vorteilhaften Ausführung erstreckt sich das aus dem Hauptteil herausgeführte dritte lichtteildurchlässige Verlängerungsteil über eine Sichtfläche eines am Fahrzeughimmel zwischen Fahrer und Beifahrer montierten Rückspiegels. Damit wird beispielsweise die Blendwirkung von Scheinwerferlicht von hinter dem Kraftfahrzeug fahrenden Fahrzeugen im Rückspiegel verringert.

Es wird vorgeschlagen, dass das Hauptteil der Sonnenblende aus recyceltem Polysterol gebildet ist. Damit wird ein ressourcenschonender und kostengünstiger Hauptteil der Sonnenblende bereitgestellt.

Die erfindungsgemäße Sonnenblende ist auch für Brillenträger vorteilhaft, da die Sonnenblende beim Führen des Fahrzeuges den notwendigen Blendschutz bereitstellt. Somit kann bei einer Sonnenblendung auf das Wechseln der Brille (Wechsel auf Sonnenbrille) verzichtet werden. Der Fahrzeugführer ist damit nicht durch das Wechseln der Brille abgelenkt.

Weiterhin wird ein Verfahren zum Betrieb einer Sonnenblende vorgeschlagen. Das Verfahren sieht die folgenden Verfahrensschritte vor:
- Erfassung der Tageszeit in der Steuereinheit über einen mit der Steuereinheit verbundenen Zeitgeber
- Erfassung einer Lichtintensität einer im Sichtfeld des Fahrers oder Beifahrers liegenden Blendquelle mit einem mit der Steuereinheit verbundenen ersten Lichtsensor
- Herausfahren des ersten Verlängerungsteils mit dem diesem Verlängerungsteil zugeordneten elektromotorischen Antrieb bei einer in der Steuereinheit als "Nacht" hinterlegten Tageszeit und beim Überschreiten einer in der Steuereinheit hinterlegten Lichtintensitätsschwelle für den ersten Lichtsensor
- Herausfahren des zweiten Verlängerungsteils mit dem diesem Verlängerungsteil zugeordneten elektromotorischen Antrieb bei einer in der Steuereinheit als "Tag" hinterlegten Tageszeit und beim Überschreiten einer in der Steuereinheit hinterlegten Lichtintensitätsschwelle für den ersten Lichtsensor

Ein weiteres Verfahren zum Betrieb einer Sonnenblende sieht die folgenden Verfahrensschritte vor:
- Erfassung einer Lichtintensität einer im Sichtfeld des Fahrers oder Beifahrers liegenden Blendquelle mit einem mit der Steuereinheit verbundenen ersten Lichtsensor
- Erfassung einer Lichtintensität eine außerhalb der Blendwirkung der Blendquelle liegenden Umgebungshelligkeit des Kraftfahrzeuges mit einem mit der Steuereinheit verbundenen zweiten Lichtsensor
- Herausfahren des ersten Verlängerungsteils mit dem diesem Verlängerungsteil zugeordneten elektromotorischen Antrieb bei einer unterhalb einer in der Steuereinheit hinterlegten Lichtintensitätsschwelle erfassten Lichtintensität für den zweiten Lichtsensor beim Überschreiten einer in der Steuereinheit hinterlegten Lichtintensitätsschwelle für den ersten Lichtsensor
- Herausfahren des zweiten Verlängerungsteils mit dem diesem Verlängerungsteil zugeordneten elektromotorischen Antrieb bei einer oberhalb einer in der Steuereinheit hinterlegten Lichtintensitätsschwelle erfassten Lichtintensität für den zweiten Lichtsensor beim Überschreiten einer in der Steuereinheit hinterlegten Lichtintensitätsschwelle für den ersten Lichtsensor

Als "Tag" wird die Tageszeit verstanden, zu der die Sonne aufgegangen ist. Als "Nacht" wird die Tageszeit verstanden, zu der die Sonne untergegangen ist.

Nachfolgend wird ein Ausführungsbeispiel der Erfindung anhand der Zeichnungen erläutert. Es zeigen:
- Fig. 1: eine Aufsicht auf eine Ausführung der erfindungsgemäßen Sonnenblende eines Kraftfahrzeuges
- Fig. 2: eine Seitenansicht auf die dem Beifahrer zugewandte Seite der Sonnenblende gemäß Fig. 1
- Fig. 3: eine Seitenansicht auf die dem Beifahrer abgewandte Seite der Sonnenblende gemäß Fig. 1
- Fig. 4: die Sonnenblende gemäß Fig. 1 auf der Fahrerseite am Fahrzeughimmel des Kraftfahrzeuges montiert
- Fig. 5: eine Aufsicht einer weiteren Ausführung der erfindungsgemäßen Sonnenblende

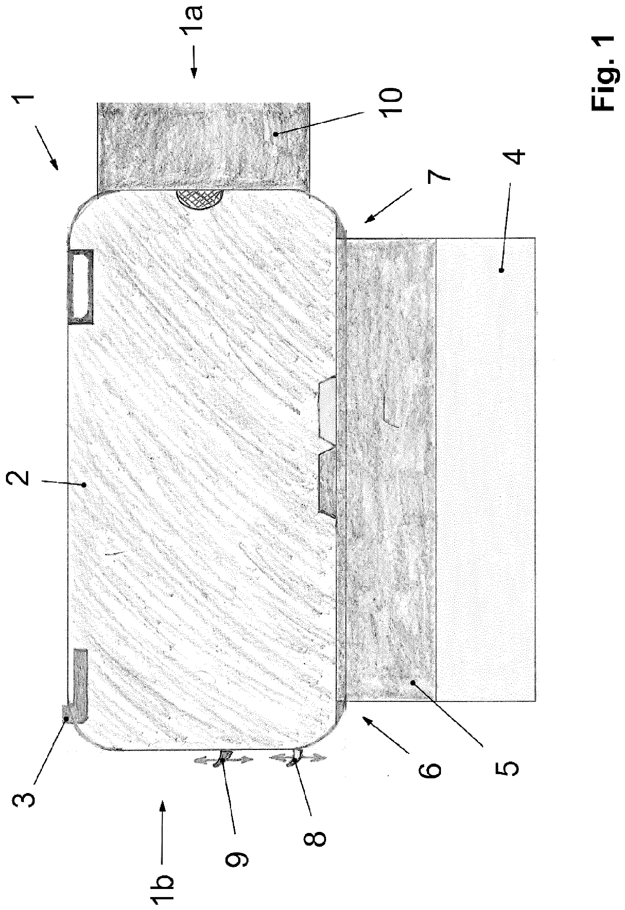

**Fig.** 1 zeigt eine Aufsicht auf eine für den Fahrer vorgesehenen Ausführung der erfindungsgemäßen Sonnenblende 1 eines Kraftfahrzeuges. Die Sonnenblende 1 ist mit ihrem Hauptteil 2 im Inneren des Kraftfahrzeuges am Fahrzeughimmel verschwenkbar an zumindest einem Befestigungspunkt 3 befestigt und weist eine dem Beifahrer zugewandte Seite 1a und eine dem Beifahrer abgewandte Seite 1b auf. Bei Bedarf ist die Sonnenblende 1 in den oberen Teil des Sichtfeldes des Fahrers des Kraftfahrzeuges verschwenkbar. Das Hauptteil 2 der Sonnenblende ist üblicherweise aus einem Polysterol gebildet. Vorteilhafterweise ist die Sonnenblende aus recyceltem Polysterol gefertigt.

Die Sonnenblende 1 weist ein erstes lichtteildurchlässiges Verlängerungsteil 4 und ein zweites lichtteildurchlässiges Verlängerungsteil 5 auf. Beide Verlängerungsteile 4, 5 sind in das Hauptteil 2 hinein- und aus dem Hauptteil 2 herausführbar. Zum Herausführen des ersten lichtteildurchlässige Verlängerungsteil 4 wird dieses von dem zumindest einen Befestigungspunkt weg über einen unteren Längsschlitz 6 aus dem Hauptteil 2 der Sonnenblende 1 herausgeschoben. Ebenso wird zum Herausführen des zweiten lichtteildurchlässige Verlängerungsteil 5 dieses von dem zumindest einen Befestigungspunkt 3 weg über den unteren Längsschlitz 6 oder einen weiteren unteren Längsschlitz 7 aus dem Hauptteil 2 der Sonnenblende 1 herausgeschoben. Beim Hinein- und Herausführen aus dem Hauptteil 2 sind das erste lichtdurchlässige Verlängerungsteil 4 und das zweite lichtdurchlässige Verlängerungsteil 5 im Wesentlichen parallel zueinander geführt. Das erste lichtteildurchlässige Verlängerungsteil 4 ist in einem Gelbton und das zweite lichtteildurchlässige Verlängerungsteil 5 in einem Grauton eingefärbt. In der Darstellung sind das erste Verlängersteil 4 vollständig und das zweite Verlängerungsteil teilweise aus dem Hauptteil 2 herausgeführt. Beide Verlängerungsteile sind aus Acrylglas gefertigt.

In der dargestellten Ausführung sind zum Hinein- und Herausführen aus dem Hauptteil 2 am ersten lichtdurchlässigen Verlängerungsteil 4 und am zweiten lichtdurchlässigen Verlängerungsteil 5 jeweils ein Schiebeelement 8, 9 vorgesehen. In der dargestellten Ausführung sind die beiden Schiebelement 8, 9 auf einer dem Beifahrer abgewandten Seite des Hauptteils 2 durch einen seitlichen Längsschlitz durch das Hauptteil 2 nach außen geführt. Das dritte Verlängerungsteil ist allerdings nicht zwingend.

Weiterhin weist die dargestellte Ausführung der Sonnenblende 1 ein drittes lichtteildurchlässiges Verlängerungsteil10 auf, welches auf der dem Beifahrer zugewandten Seite 1a über einen seitlichen Längsschlitz aus dem Hauptteil 2 der Sonnenblende 1 herausführbar ist. Das dritte lichtteildurchlässige Verlängerungsteil ist in einem Gelbton oder einem Grauton eingefärbt.

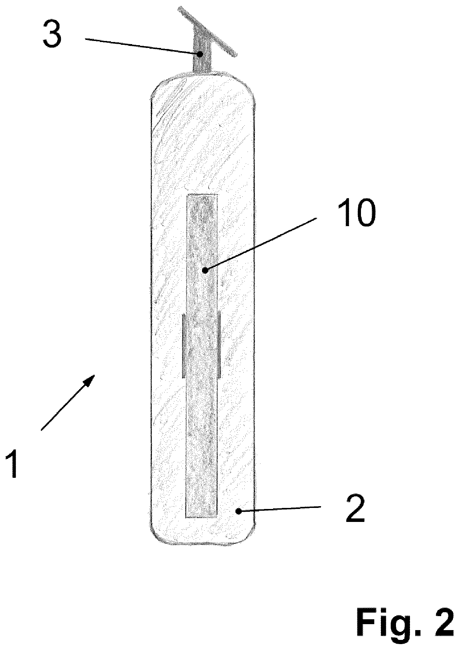

**Fig. 2** zeigt eine Seitenansicht auf die dem Beifahrer zugewandte Seite der Sonnenblende 1 gemäß **Fig. 1****.** Sowohl das erste Verlängerungsteil 4 als auch das zweite Verlängerungsteil 5 sind in dieser Darstellung vollständig in das Hauptteil 2 der Sonnenblende 1 eingeschoben und damit nicht sichtbar. Sichtbar ist hingegen das dritte Verlängerungsteil 10.

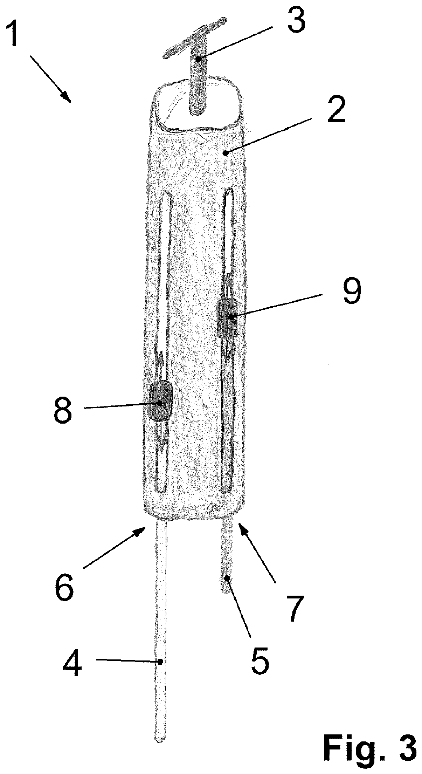

**Fig. 3** zeigt eine Seitenansicht auf die dem Beifahrer abgewandte Seite der Sonnenblende 1 gemäß **Fig. 1****.** Sowohl das erste Verlängerungsteil 4 als auch das zweite Verlängerungsteil 5 sind in dieser Darstellung teilweise aus dem Hauptteil 2 der Sonnenblende 1 herausgeschoben. Weiterhin sind die die beiden Schiebelemente 8, 9 des ersten und zweiten Verlängerungsteils 4, 5 sichtbar. In der dargestellten Ausführung ist das erste Verlängerungsteil vom Fahrer aus gesehen hinter dem zweiten Verlängerungsteil angeordnet. Dies ist allerdings nicht zwingend. Ebenso kann auch das zweite Verlängerungsteil vom Fahrer aus gesehen hinter dem ersten Verlängerungsteil angeordnet sein.

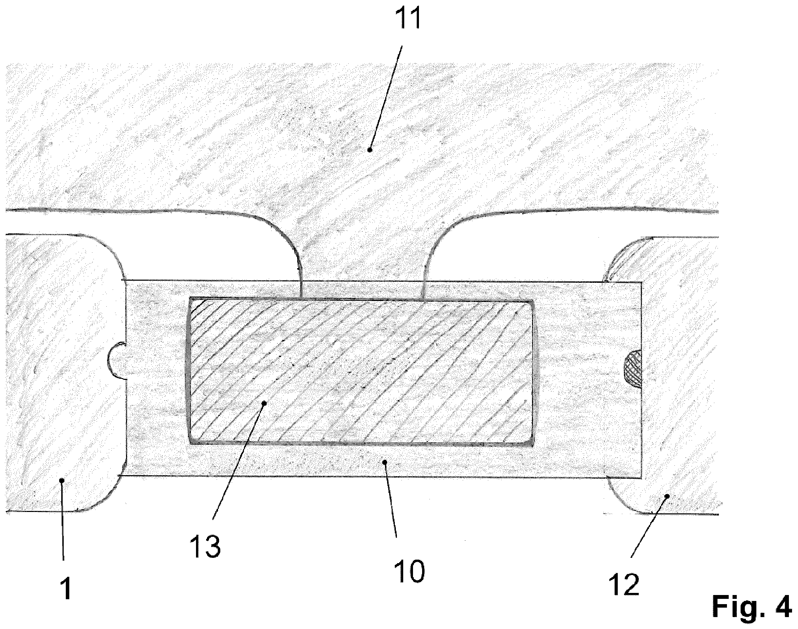

**Fig. 4** zeigt die Sonnenblende 1 gemäß **Fig. 1** auf der Fahrerseite am Fahrzeughimmel 11 des Kraftfahrzeuges montiert. Zwischen der Sonnenblende 1 auf der Fahrerseite und einer weiteren Sonnenblende 12 auf der Beifahrerseite ist ein am Fahrzeughimmel 11 montierter Rückspiegel 13 angeordnet. Die Symmetrielängsachsen der beiden Sonnenblenden 1, 12 und die Symmetrielängsachse des Rückspiegels 13 sind in etwa fluchtend zueinander ausgerichtet. Sowohl das erste Verlängerungsteil 4 als auch das zweite Verlängerungsteil 5 sind in dieser Darstellung vollständig in das Hauptteil 2 der Sonnenblende 1 eingeschoben und damit nicht sichtbar. Das dritte Verlängerungsteil ist vollständig aus dem Hauptteil der Sonnenblende herausgezogen und erstreckt sich über die gesamte Sichtfläche des Rückspiegels.

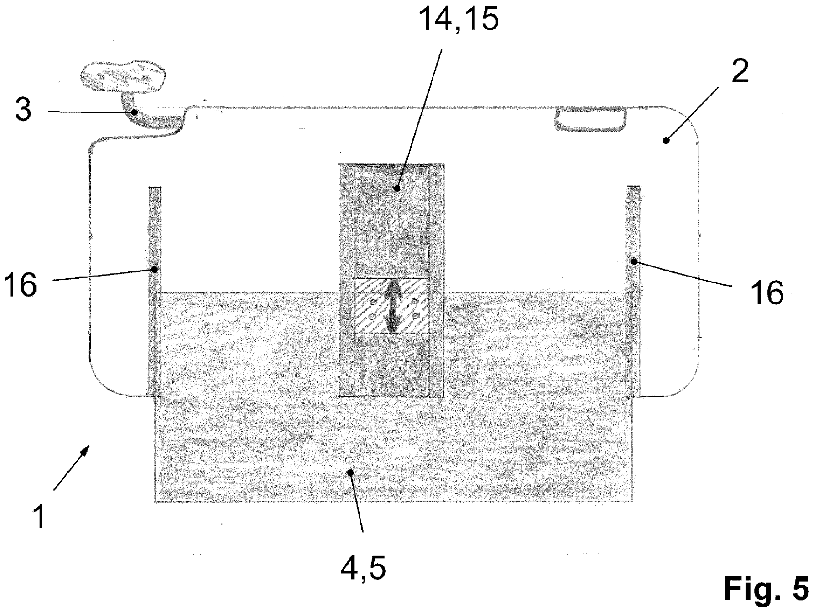

**Fig. 5** zeigt eine Aufsicht einer weiteren Ausführung der erfindungsgemäßen Sonnenblende 1. Diese Ausführung weist kein drittes Verlängerungsteil 10 auf. Abweichend zur Ausführung gemäß **Fig. 1** werden das erste lichtteildurchlässige Verlängerungsteil 4 und/oder das zweite lichtteildurchlässige Verlängerungsteil 5 jeweils über einen im Hauptteil 2 der Sonnenblende 1 integrierten elektromotorischen Antrieb aus dem Hauptteil 2 der Sonnenblende 1 herausgeführt. In der Darstellung ist nur eine der beiden Verlängerungsteile 4, 5 mit motorischem Antrieb 14, 15 gezeigt. Die beiden Verlängerungsteile 4, 5 werden seitlich jeweils über Führungsschienen 16 geführt. Die motorischen Antriebe sind mit einer Steuereinheit verbunden, sodass das Hinein- und Herausfahren der beiden Verlängerungsteile 4, 5 elektronisch steuerbar ist.

In einer nicht dargestellten Ausführung ist die Steuereinheit mit einem ersten Lichtsensor verbunden, wobei der erste Lichtsensor eine im Sichtfeld des Fahrers oder Beifahrers liegende Blendquelle erfasst. Der mit der Steuereinheit verbundene elektromotorische Antrieb ist damit über den ersten Lichtsensor beleuchtungsabhängig ansteuerbar.

Weiterhin kann die Steuereinheit mit einem Zeitgeber verbunden sein. Bei einer derartigen Ausführung erfolgt die Ansteuerung der elektrische Antriebe 14, 15 des ersten und zweiten Verlängerungsteils 4, 5 über die folgenden Verfahrensschritte:
- Erfassung der Tageszeit in der Steuereinheit über einen mit der Steuereinheit verbundenen Zeitgeber
- Erfassung einer Lichtintensität einer im Sichtfeld des Fahrers oder Beifahrers liegenden Blendquelle mit einem mit der Steuereinheit verbundenen ersten Lichtsensor
- Herausfahren des ersten Verlängerungsteils mit dem diesem Verlängerungsteil zugeordneten elektromotorischen Antrieb bei einer in der Steuereinheit als "Nacht" hinterlegten Tageszeit und beim Überschreiten einer in der Steuereinheit hinterlegten Lichtintensitätsschwelle für den ersten Lichtsensor
- Herausfahren des zweiten Verlängerungsteils mit dem diesem Verlängerungsteil zugeordneten elektromotorischen Antrieb bei einer in der Steuereinheit als "Tag" hinterlegten Tageszeit und beim Überschreiten einer in der Steuereinheit hinterlegten Lichtintensitätsschwelle für den ersten Lichtsensor

Alternativ kann die Steuereinheit auch mit einem zweiten Lichtsensor verbunden sein, wobei dieser zweite Lichtsensor eine Umgebungshelligkeit des Kraftfahrzeuges als Maß der Tageszeit erfasst. Der mit der Steuereinheit verbundene elektromotorische Antrieb ist damit auch über den zweiten Lichtsensor beleuchtungsabhängig ansteuerbar. Bei einer derartigen Ausführung erfolgt die Ansteuerung der elektrische Antriebe 14, 15 des ersten und zweiten Verlängerungsteils 4, 5 über die folgenden Verfahrensschritte:
- Erfassung einer Lichtintensität einer im Sichtfeld des Fahrers oder Beifahrers liegenden Blendquelle mit einem mit der Steuereinheit verbundenen ersten Lichtsensor
- Erfassung einer Lichtintensität eine außerhalb der Blendwirkung der Blendquelle liegenden Umgebungshelligkeit des Kraftfahrzeuges mit einem mit der Steuereinheit verbundenen zweiten Lichtsensor
- Herausfahren des ersten Verlängerungsteils mit dem diesem Verlängerungsteil zugeordneten elektromotorischen Antrieb bei einer unterhalb einer in der Steuereinheit hinterlegten Lichtintensitätsschwelle erfassten Lichtintensität für den zweiten Lichtsensor beim Überschreiten einer in der Steuereinheit hinterlegten Lichtintensitätsschwelle für den ersten Lichtsensor
- Herausfahren des zweiten Verlängerungsteils mit dem diesem Verlängerungsteil zugeordneten elektromotorischen Antrieb bei einer oberhalb einer in der Steuereinheit hinterlegten Lichtintensitätsschwelle erfassten Lichtintensität für den zweiten Lichtsensor beim Überschreiten einer in der Steuereinheit hinterlegten Lichtintensitätsschwelle für den ersten Lichtsensor

### Bezugszeichenliste

- 1: Sonnenlende
- 1a: dem Beifahrer zugewandte Seite der Sonnenblende 1
- 1b: dem Beifahrer abgewandte Seite der Sonnenblende 1
- 2: Hauptteil
- 3: Befestigungspunkt
- 4: erstes Verlängerungsteil
- 5: zweites Verlängerungsteil
- 6: unterer Längsschlitz im Hauptteil 2
- 7: unterer Längsschlitz im Hauptteil 2
- 8: Schiebeelement
- 9: Schiebeelement
- 10: drittes Verlängerungsteil
- 11: Fahrzeughimmel
- 12: weitere Sonnenblende
- 13: Rückspiegel des Kraftfahrzeuges
- 14: motorischer Antrieb
- 15: motorischer Antrieb
- 16: Führungsschiene

## Patentansprüche

1. Sonnenblende (1) eines Kraftfahrzeuges, die im Inneren des Kraftfahrzeuges am Fahrzeughimmel (11) verschwenkbar an zumindest einem Befestigungspunkt (3) befestigt ist und bei Bedarf in den oberen Teil des Sichtfeldes des Fahrers oder Beifahrers des Kraftfahrzeuges verschwenkbar ist, wobei ein Hauptteil (2) der Sonnenblende (1) ein erstes lichtteildurchlässiges Verlängerungsteil (4) aufweist, welches von dem zumindest einen Befestigungspunkt (3) weg über einen unteren Längsschlitz (6) aus dem Hauptteil (2) der Sonnenblende (1) herausführbar ist, **dadurch gekennzeichnet,**
**dass** die Sonnenblende (1) ein zweites lichtteildurchlässiges Verlängerungsteil (5) aufweist, welches von dem zumindest einen Befestigungspunkt (3) weg über den unteren Längsschlitz (6) oder einen weiteren unteren Längsschlitz (7)aus dem Hauptteil (2) der Sonnenblende (1) herausführbar ist und dass das erste lichtteildurchlässige Verlängerungsteil (4) und das zweite lichtteildurchlässige Verlängerungsteil (5) im Wesentlichen parallel zueinander geführt sind und dass das erste lichtteildurchlässige Verlängerungsteil (4) in einem Gelbton und das zweite lichtteildurchlässige Verlängerungsteil (5) in einem Grauton eingefärbt ist.

2. Sonnenblende (1) nach Anspruch 1, **dadurch gekennzeichnet, dass** das erste lichtteildurchlässige Verlängerungsteil (4) und/oder das zweite lichtteildurchlässige Verlängerungsteil (5) jeweils mit einem aus dem Hauptteil (2) der Sonnenblende (1) herausgeführten Schiebeelement (8, 9) herausführbar sind.

3. Sonnenblende (1) nach einem der vorgenannten Ansprüche, **dadurch gekennzeichnet, dass** das erste lichtteildurchlässige Verlängerungsteil (4) und/oder das zweite lichtteildurchlässige Verlängerungsteil (5) jeweils über einen im Hauptteil (2) der Sonnenblende (1) integrierten elektromotorischen Antrieb (14, 15) aus dem Hauptteil (2) der Sonnenblende (1) herausführbar sind.

4. Sonnenblende (1) nach Anspruch 3, **dadurch gekennzeichnet, dass** der elektromotorische Antrieb mit einer Steuereinheit verbunden ist und diese Steuereinheit mit einem ersten Lichtsensor verbunden ist und der elektromotorische Antrieb (14, 15) über die Steuereinheit und den ersten Lichtsensor beleuchtungsabhängig steuerbar ist, wobei der erste Lichtsensor eine im Sichtfeld des Fahrers oder Beifahrers liegende Blendquelle erfasst.

5. Sonnenblende (1) nach Anspruch 4, **dadurch gekennzeichnet, dass** die Steuereinheit mit einem Zeitgeber verbunden ist.

6. Sonnenblende (1) nach Anspruch 4, **dadurch gekennzeichnet, dass** die Steuereinheit mit einem zweiten Lichtsensor verbunden ist und dieser zweite Lichtsensor eine Umgebungshelligkeit des Kraftfahrzeuges als Maß der Tageszeit erfasst und dass und der elektromotorische Antrieb (14, 15) über die Steuereinheit und den zweiten Lichtsensor beleuchtungsabhängig steuerbar ist.

7. Sonnenblende (1) nach einem der vorgenannten Ansprüche, **dadurch gekennzeichnet, dass** die Sonnenblende (1) auf der Fahrerseite des Fahrzeuges montiert ist und dass die Sonnenblende (1) ein drittes lichtteildurchlässiges Verlängerungsteil (10) aufweist und dass dieses dritte lichtteildurchlässige Verlängerungsteil (10) auf einer dem Beifahrer zugewandten Seite über einen seitlichen Längsschlitz aus dem Hauptteil (2) der Sonnenblende (1) herausführbar ist.

8. Sonnenblende (1) nach Anspruch 7, **dadurch gekennzeichnet, dass** das dritte lichtteildurchlässige Verlängerungsteil (10) in einem Gelbton oder einem Grauton eingefärbt ist.

9. Sonnenblende (1) nach einem der Ansprüche 7 oder 8, **dadurch gekennzeichnet, dass** sich das aus dem Hauptteil (2) herausgeführte dritte lichtteildurchlässige Verlängerungsteil (10) über eine Sichtfläche eines am Fahrzeughimmel (11) zwischen Fahrer und Beifahrer montierten Rückspiegels (13) erstreckt.

10. Sonnenblende (1) nach einem der vorgenannten Ansprüche, **dadurch gekennzeichnet, dass** das Hauptteil (2) der Sonnenblende (1) aus recyceltem Styropor gebildet ist.

11. Verfahren zum Betrieb einer Sonnenblende (1) nach Anspruch 5, **dadurch gekennzeichnet, dass** die Steuereinheit über einen Zeitgeber die Tageszeit und über den ersten Lichtsensor eine Lichtintensität einer im Sichtfeld des Fahrers oder Beifahrers liegenden Blendquelle erfasst und dass bei einer in der Steuereinheit als "Nacht" hinterlegten Tageszeit beim Überschreiten einer in der Steuereinheit hinterlegten Lichtintensitätsschwelle für den ersten Lichtsensor das erste Verlängerungsteil (4) mit dem diesem Verlängerungsteil zugeordneten elektromotorischen Antrieb (14, 15) aus dem Hauptteil (2) der Sonnenblende (1) herausgefahren wird und dass bei einer in der Steuereinheit als "Tag" hinterlegten Tageszeit beim einer in der Steuereinheit hinterlegten Lichtintensitätsschwelle für den ersten Lichtsensor das zweite Verlängerungsteil (5) mit dem diesem Verlängerungsteil zugeordneten elektromotorischen Antrieb (14, 15) aus dem Hauptteil (2) der Sonnenblende (1) herausgefahren wird.

12. Verfahren zum Betrieb einer Sonnenblende (1) nach Anspruch 6, **dadurch gekennzeichnet, dass** die Steuereinheit über den ersten Lichtsensor eine Lichtintensität einer im Sichtfeld des Fahrers oder Beifahrers liegenden Blendquelle erfasst und dass die Steuereinheit über den zweiten Lichtsensor eine außerhalb der Blendwirkung der Blendquelle liegende Umgebungshelligkeit des Kraftfahrzeuges erfasst und dass bei einer unterhalb einer in der Steuereinheit hinterlegten Lichtintensitätsschwelle für den zweiten Lichtsensor beim Überschreiten einer in der Steuereinheit hinterlegten Lichtintensitätsschwelle erfassten Lichtintensität für den ersten Lichtsensor das erste Verlängerungsteil (4) mit dem diesem Verlängerungsteil zugeordneten elektromotorischen Antrieb (14, 15) aus dem Hauptteil (2) der Sonnenblende (1) herausgefahren wird und dass bei einer oberhalb einer in der Steuereinheit hinterlegten Lichtintensitätsschwelle für den zweiten Lichtsensor beim Überschreiten einer in der Steuereinheit hinterlegten Lichtintensitätsschwelle erfassten Lichtintensität für den ersten Lichtsensor das zweite Verlängerungsteil (5) mit dem diesem Verlängerungsteil zugeordneten elektromotorischen Antrieb (14, 15) aus dem Hauptteil (2) der Sonnenblende (1) herausgefahren wird.
